(19) Europäisches Patentamt
European Patent Office
Office européen des brevets

(11) **EP 3 059 100 B1**

(12) **EUROPEAN PATENT SPECIFICATION**

(45) Date of publication and mention
of the grant of the patent:
**15.05.2019 Bulletin 2019/20**

(21) Application number: **14860364.0**

(22) Date of filing: **17.07.2014**

(51) Int Cl.:
***B60C 3/04*** *(2006.01)*    ***B60C 9/08*** *(2006.01)*
***B60C 9/04*** *(2006.01)*    ***B60C 15/00*** *(2006.01)*
***D02G 3/48*** *(2006.01)*    ***D07B 1/02*** *(2006.01)*
***D07B 1/06*** *(2006.01)*

(86) International application number:
**PCT/JP2014/068982**

(87) International publication number:
**WO 2015/068429 (14.05.2015 Gazette 2015/19)**

(54) **PNEUMATIC TIRE**

LUFTREIFEN

PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.11.2013 JP 2013233337**

(43) Date of publication of application:
**24.08.2016 Bulletin 2016/34**

(73) Proprietor: **Sumitomo Rubber Industries, Ltd.
Kobe-shi, Hyogo 651-0072 (JP)**

(72) Inventor: **KAJITA Hiroaki
Kobe-shi
Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**WO-A1-2011/161854      WO-A1-2013/065318
WO-A1-2013/065318      WO-A1-2013/065322
JP-A- H01 240 304      JP-A- H01 240 304
US-A1- 2013 168 000**

**Description**

**Technical field**

The present invention relates to a pneumatic tire having improved fuel consumption while maintaining steering stability.

**Background Art**

As a factor of fuel economy in tires, rolling resistance of tires and air resistance is known. The major cause of rolling resistance of tires is energy loss due to repeated deformation of rubber during traveling. In order to reduce the rolling resistance, it is proposed to use a tread rubber having low energy loss (low tan $\delta$).

When the rubber having low energy loss is used, although the rolling resistance is reduced, grip performance (especially, wet grip performance) is, however, lowered, and there is another problem that the wear resistance is also deteriorated. As shown in JP 2004-010781 and JP 2004-002622, studies of the tread rubber composition having a reduced rolling resistance while improving wear resistance has been developed. Unfortunately, only improvement depending on rubber composition gives insufficient effect. Thus, another approach to improve rolling resistance in terms of other than improvement of rubber composition is strongly demanded.

In view of these circumstances, the present inventors who had conducted studies were able to find the following. When a tire section width is reduced while maintaining its tire outer diameter, a tread width is also decreased accordingly. Thus, the volume of the tread rubber is also reduced. As a result, the energy loss caused by the tread rubber is reduced, and the weight of the tire is also reduced. Furthermore, when viewing a vehicle from its front, a tire exposed area appearing downward from a bumper edge is reduced according to the reduced tire section width. This makes it possible to reduce the air resistance of the tire.

Furthermore, when a bead diameter is enlarged while maintaining its tire outer diameter, a sidewall region which tends to deform largely during traveling narrows. As a result, a reduction in energy loss in the sidewall region as well as the weight of the tire can be achieved.

Therefore, it has been confirmed that a narrow width and large bead diameter tire in which the tire section width is reduced while enlarging the bead diameter has significantly improved fuel economy through reduction of energy loss in the tread portion and the sidewall portion, reduction of tire mass, and reduction of air resistance.

Unfortunately, as a result of further study of the inventor of the present invention, the above-mentioned narrow width and large bead diameter tire has also reduced both the tread width and the belt width according to the reduced tire section width. Thus, the lateral rigidity of the tire tends to decrease, and the inventor has found a new problem that the steering stability is deteriorated due to insufficient cornering force.

Pneumatic tires according to the preamble of claim 1 are known from WO 2013/065322 A1, which shows the preamble of claim 1, WO 2013/065318 A1 and US 2013/0168000 A1. JP H01 240304 A discloses a pneumatic tire having a carcass layer comprising an aromatic polyamide fiber cord.

**Summary of invention**

**Technical Problem**

The present invention has an object to provide a pneumatic tire with narrow width and large bead diameter capable of improving fuel consumption while maintaining the steering stability by basically employing an aramid fiber cord as the carcass cord.

**Solution to Problem**

The present invention is directed to a pneumatic tire including a carcass including one carcass ply including a ply main body portion extending between bead cores of bead portions through a tread portion and sidewall portions and a pair of ply turn-up portions each turned up around each bead core, a belt layer including two belt plies disposed radially outward of the carcass in the tread portion, a band layer including one band ply disposed radially outward of the belt layer, a tire section width Wt (unit: mm) in relation to a bead diameter Db (unit: inch) satisfying the following equations (1) and (2),

$$Wt \leq -0.7257 \times (Db)^2 + 42.763 \times Db - 339.67 \ \text{---} \ (1),$$

and

$$Wt \geq -0.7257 \text{ x } (Db)^2 + 48.568 \text{ x } Db - 552.33 \text{ --- } (2);$$

a tire outer diameter Dt (unit: mm) satisfying the following equations (3) and (4),

$$Dt \leq 59.078 \text{ x } Wt^{0.498} \text{ --- } (3),$$

$$Dt \geq 59.078 \text{ x } Wt^{0.467} \text{ --- } (4);$$

and
a carcass cord of the carcass ply being made of an aramid fiber cord.

In the pneumatic tire according to the present invention, the aramid fiber cord comprises a cord structure of 800 dtex/2, and a radial height H of outer ends of the ply turn-up portions from a bead base line are of from 10 to 35 mm.

In the pneumatic tire according to the present invention, it is preferable that the aramid fiber cord of the carcass ply comprises a cord structure of 800 dtex/2, and that the number of final twist of the aramid fiber cord per 10 cm of cord length is of from 50 to 65 times.

**Advantageous Effects of Invention**

The pneumatic tire according to the present invention is configured as a tire having narrow width and large bead diameter, and the tire section width Wt satisfies the above mentioned equations (1) and (2), and the tire outer diameter Dt (unit: mm) satisfies the above mentioned equations (3) and (4). Therefore reduction of energy loss in the tread portion and the sidewall portion, reduction of tire weight, and reduction of air resistance may be achieved, thereby improving fuel consumption.

However, since the tire having narrow width and large bead diameter has a narrow tread width and belt width, the lateral rigidity of the tire tends to decrease and the new problem that the steering stability is deteriorated due to insufficient cornering force is caused.

In the present invention, the reduction of the lateral rigidity of the tire can be suppressed by employing an aramid fiber cord as the carcass cord. As a result, it is possible that the steering stability can be maintained while achieving the effect of improved fuel consumption.

**Brief Description of Drawings**

FIG. 1 is a cross sectional view of a pneumatic tire according to the present embodiment of the invention.
FIG. 2 is a graph showing the relationship between a tire section width and a bead diameter of conventional tires based on JATMA.
FIG. 3 is a graph showing the relationship between a tire section width and a tire outer diameter of conventional tires based on JATMA.
FIG. 4 is a conceptual diagram for explaining the effect of enlarged tire diameter.

**Description of Embodiments**

Hereinafter, an embodiment of the present invention will be described in detail.

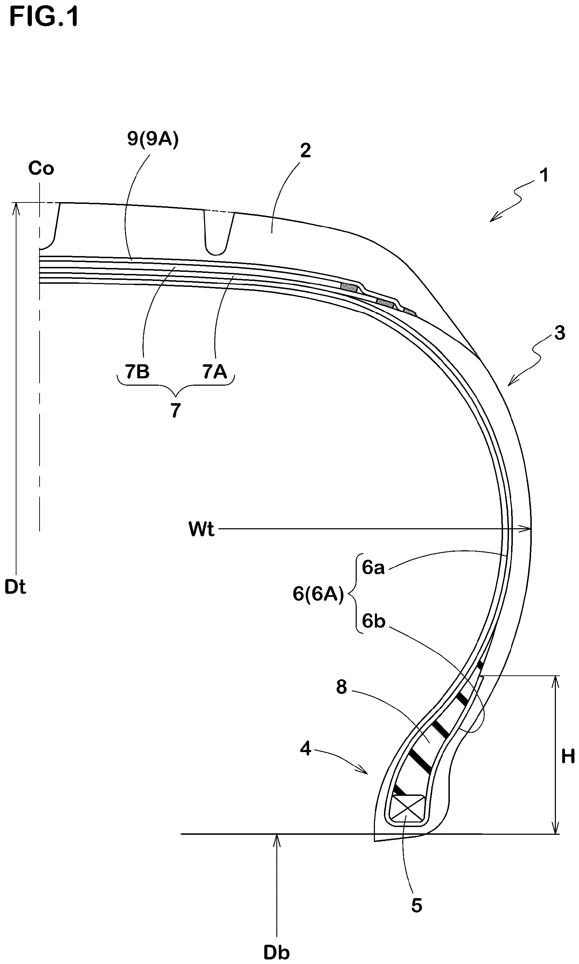

As illustrated in FIG. 1, a pneumatic tire 1 according to the present embodiment includes a carcass 6 extending between bead cores 5 of bead portions 4 through a tread portion 2 and sidewall portions 3, a belt layer 7 disposed radially outward of the carcass 6 in the tread portion 2 and a band layer 9 disposed radially outward of the belt layer 7. In this embodiment, the pneumatic tire 1 is exemplified as a radial tire for passenger cars, for example.

The carcass 6 includes one carcass ply 6A of carcass cords arranged at an angle of from 75 to 90 degrees with respect to a tire equatorial plane Co, for example. The carcass ply 6A includes a toroidal ply main body portion 6a extending between the bead cores 5 and 5, and a pair of ply turn-up portions 6b each turned up around the bead core 5 from axially inside to the outside of the tire. A bead apex rubber 8 that extends radially outwardly from the bead core 5 in a tapered shape is disposed between the ply main body portion 6a and the ply turn-up portion 6b to reinforce the bead portion.

The belt layer 7 includes two belt plies 7A and 7B of belt cords arranged at an angle of from 10 to 35 degrees with respect to the tire equatorial plane Co. The belt cords of each ply intersect one another. This increases the belt rigidity, and the tread portion 2 can be reinforced strongly with a hoop effect.

The band layer 9 includes one band ply 9A which is formed by spirally winding a band cord at an angle of not more than 5 degrees with respect to the tire equatorial plane Co. With this, the high speed durability can be improved by preventing growth of the tire outer diameter during a high speed traveling, in particular, growth of the diameter in a shoulder side.

The pneumatic tire 1 is configures as a narrow width and large bead diameter tire in which a tire section width Wt (Unit: mm) and a bead diameter Db (Unit: inch) satisfy the following equations (1) and (2).

$$ Wt \leq -0.7257 \times (Db)^2 + 42.763 \times Db - 339.67 \text{ --- (1)} $$

$$ Wt \geq -0.7257 \times (Db)^2 + 48.568 \times Db - 552.33 \text{ --- (2)} $$

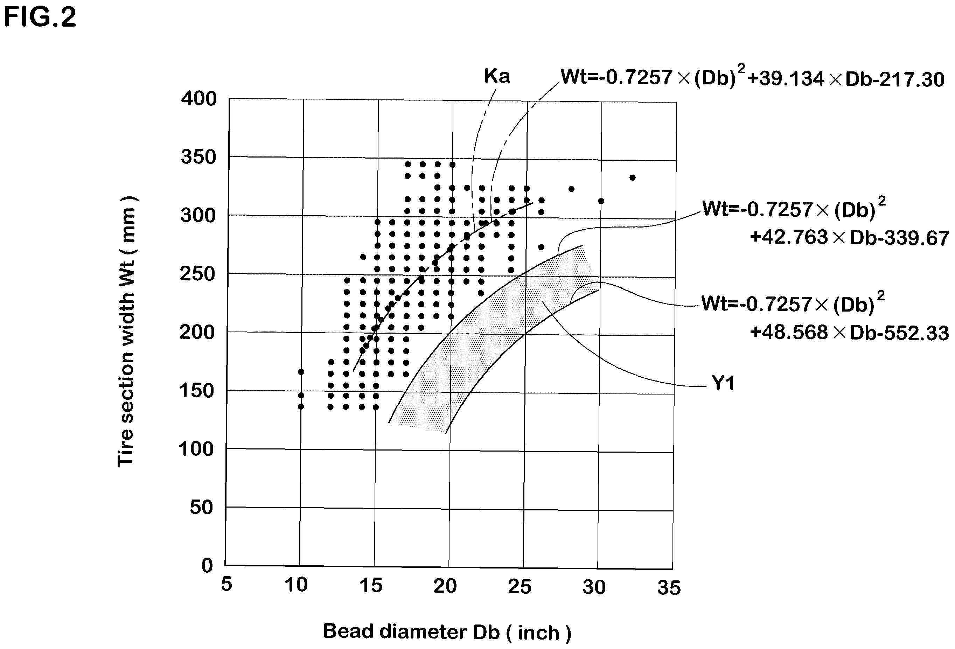

FIG. 2 is a graph showing the relationship between the tire section width Wt and the bead diameter Db of conventional tires based on JATMA. From this study result, the average relationship between the tire section width and the bead diameter of the conventional tires based on JATMA, as indicated by one-dot chain line Ka in the Figure, it can be identified by the following equation (A):

$$ Wt = -0.7257 \times (Db)^2 + 39.134 \times Db - 217.30 \text{ --- (A).} $$

In contrast, the region Y1 that satisfies the equations (1) and (2) is outside the scope of the conventional tires shown in the plots. Furthermore, the region Y exists on the location where the relationship Ka identified by the equation (A) is moved parallel to a direction to decrease the tire section width Wt as well as to enlarge the bead diameter Db. That is, the tire satisfying the equations (1) and (2) is configured so as to have a narrow tire section width Wt and an enlarged bead diameter Db as compared with conventional tires having the same tire outer diameter.

Such a tire with a narrow tire section width may provide a narrow tread width which offers less tread rubber volume accordingly. Therefore the amount of energy loss caused by the tread rubber is relatively less, and the tire mass is also reduced. Furthermore, when a vehicle is viewed from its front, a tire exposed area appearing downward from a bumper edge is reduced according to the reduced tire section width. This makes it possible to reduce the air resistance of the tire.

Furthermore, since the tire has an enlarged bead diameter as compared with conventional tires having the same tire outer diameter, a sidewall region which tends to deform largely during traveling becomes narrow. As a result, a reduction in energy loss by the sidewall portion 3 as well as the weight of the tire can be achieved.

Accordingly, the tire having narrow width and large bead diameter may improve the fuel efficiency through a reduction in energy loss by the tread portion 2 and the sidewall portions 3, a reduction in tire mass, and the reduction of air resistance.

When the tire section width Wt does not satisfy the equation (1), improvement of the fuel efficiency is insufficient owing to insufficient improvement reducing the section width or enlarging the bead diameter. When the tire does not satisfy the equation (2), the tire tends to have excessively narrow width. Such a tire may be necessary to be inflated with a high internal pressure in order to ensure use of under the load capacity. In this situation, ride comfort and road noise performance may be deteriorated.

In order to further improve the fuel efficiency, the pneumatic tire 1 has a tire outer diameter Dt (Unit: mm) satisfying the following equations (3) and (4).

$$ Dt \leq 59.078 \times Wt^{0.498} \text{ --- (3)} $$

$$ Dt \geq 59.078 \times Wt^{0.467} \text{ --- (4)} $$

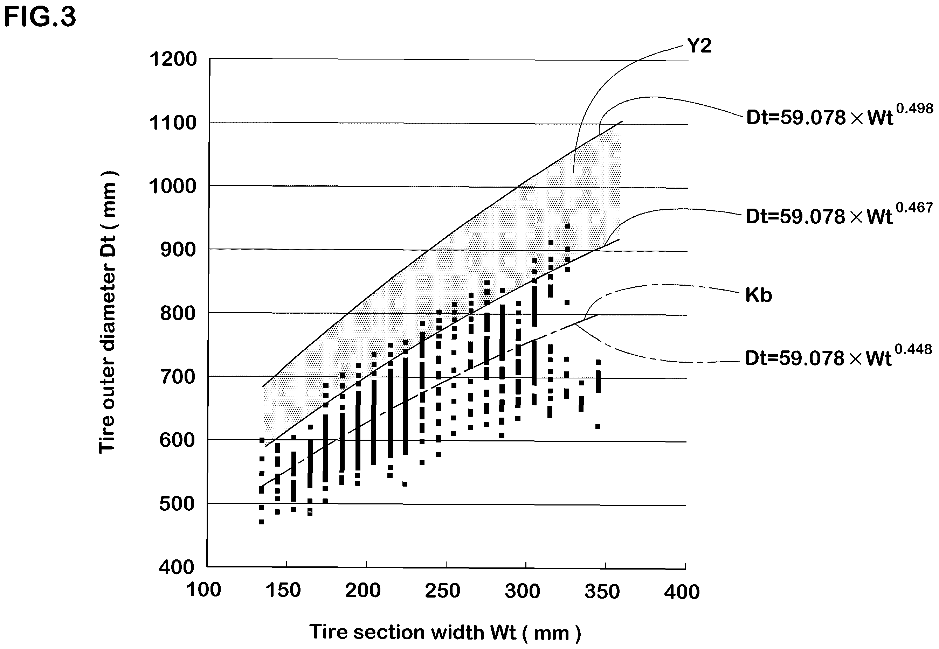

FIG. 3 illustrates a graph showing the relationship between tire section widths Wt and tire outer diameters Dt of conventional tires based on JATMA. From the study result, the average relationship between tire section widths Wt and tire outer diameters Dt of the conventional tire based on JATMA, as indicated by one-dot chain line Kb in the Figure, can be identified by the following equation (B).

$$Dt = 59.078 \times Wt^{0.448} \text{ --- (B)}$$

In contrast, the region Y2 that satisfies the equations (3) and (4) exists on the location where the relationship Kb identified by the equation (B) is moved parallel to a direction to enlarge the tire outer diameter Dt. That is, the tire satisfying the equations (3) and (4) has a narrow width, a large bead diameter and a large tire outer diameter Dt.

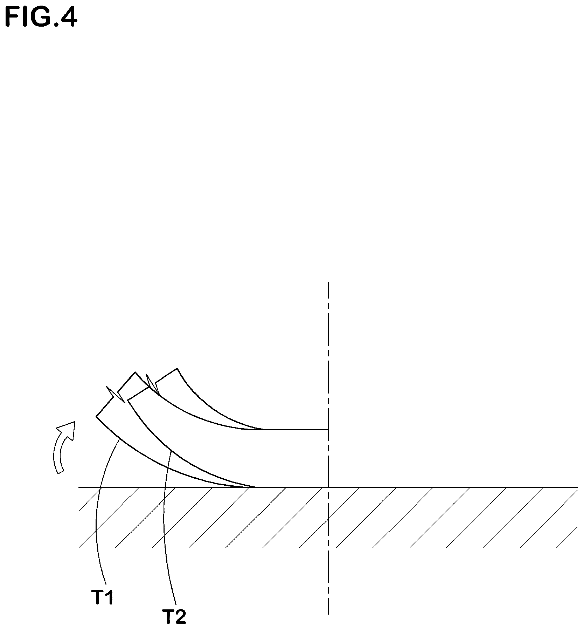

The tire T1 with a relatively large outer diameter Dt, as conceptually shown in FIG. 4, is small in amount of bending deformation in the circumferential direction of the tire as compared with the tire T2 with a relatively small outer diameter. Accordingly, the tire is small in energy loss and has advantageous effect of low rolling resistance. Therefore, when the tire does not satisfy the equation (4), low rolling resistance may not be expected. On the other hand, when the tire does not satisfy the equation (3), it may be necessary to be inflated with a high internal pressure to ensure necessary load capacity, and therefore ride comfort and road noise performance may be deteriorated.

Next, the pneumatic tire in accordance with the present invention employs an aramid fiber cord as the carcass cords in order to prevent deterioration of steering stability performance in a narrow width and large bead diameter tire.

This may enhance rigidity of the carcass, and then it prevents deterioration of lateral rigidity of the tire caused according to reduction of tire section width in good balance.

In particular, for the aramid cord, an extra fine cord having a cord structure of 800 dtex/2 is employed. With respect to steering stability of the tire, it is important to balance the resistance to elongation (elasticity) in the carcass cord and restorability thereof. For instance, an aramid fiber cord having a standard fineness of 1670 dtex/2 is difficult to elongate as compared with a rayon fiber cord of 1840 dtex/2 due to a high elastic modulus greater than that of the rayon fiber cord. The aramid fiber cord, however, generates large hysteresis loss when the cord is restored to the original length by unloading from an elongated condition, since the loss tangent of the aramid fiber cord is greater than that of the rayon fiber cord. Since the standard fineness aramid fiber cord has poor restorability, it may be difficult to improve steering stability. On the other hand, since an extra fine aramid fiber cord of 800 dtex/2 has an excellent elongation property and restorability of cord, an excellent steering stability can be achieved.

In a tire having a narrow width and a large bead diameter, it is necessary to set up the inner pressure in relatively high in order to ensure the required load capacity. Thus, the number of the cords embedded in the ply is preferably in range of from 45/5cm to 55/5cm, more preferably 50/5cm in order to ensure sufficient rigidity of the carcass when the extra fine aramid fiber cord is employed. Furthermore, the number n1 of the final twist of the aramid fiber cord is preferably in a range of from 50 to 65 per 10cm of cord length. The number n2 of the primary twist is in a range of from 90% to 110% of the number n1 of the final twist, and more preferably n1 is equal to n2. When the number n1 of the final twist is less than 50, ride comfort may be deteriorated due to increase of the cord rigidity, and when the number n1 is more than 65, steering stability may be deteriorated due to reduction of the cord rigidity.

In the carcass ply 6A, the radial height H of the outer end of the ply turn-up portion 6b from the bead base line BL is equal to or more than 10 mm. When it is less than that, there may be a problem about durability in that the ply turn-up portion 6b may be slipped out from the bead core 5 pulled. Furthermore, the height H is equal to or less than 35 mm. When it is more than that, there may be a problem in that a cord loose may be caused due to an compression strain on an end of the carcass cords during traveling. This is a distinctive problem caused by the aramid fiber cord employed as the carcass cord wherein the aramid fiber cord has poor adhesive property with rubber and high rigidity.

**Example**

(1) Pneumatic tires having an internal structure illustrated in FIG. 1 were manufactured based on the detail shown in Table 1. Then, rolling resistance, air resistance, ride comfort, steering stability and road noise of each test tire was tested. The common specification is as follows.

Carcass

Number of ply: 1
Cord angle: 90 degrees

Belt layer

Number of ply: 2
Cord angle: 22 degrees and -22 degrees
Cord: Steel

Band layer

Number of ply: 1
Cord angle: About 0 degree
Cord: Nylon

Rolling resistance:

Using a rolling resistance tester, under the following conditions, rolling resistance (unit: N) of each test tire was measured. The test results were shown using an index of the reciprocal of the respective values of rolling resistance, wherein Comparative Example 1 is 100. The larger the value, the lower the rolling resistance is.
Temperature: 20 degrees C.
Load: 4.82 kN
Internal pressure: Listed in Table 1 (internal pressure corresponding to load index)
Rim: Standard rim
Speed: 80 km/h
Alignment (toe angle of 0 degree and camber angle of 0 degree)

Air resistance:

In a laboratory, a force received from each test tire mounted on a vehicle was measured under the condition where the air with a speed corresponding to the vehicle running speed of 100 km/h was provided toward the test tire exposed from a lower edge of the bumper, wherein the tire exposed height was set to 140 mm. The test results were shown using an index of the reciprocal of the respective forces, wherein Comparative Example 1 is 100. The larger the value, the better the air resistance is.

Steering stability and ride comfort:

Each test tire was installed in an electric automobile, which corresponds to a Japanese light automobile, as four wheels with an inner pressure shown in Table 1, and then a test driver drove the automobile on a tire test course of a dry asphalt road, and evaluated steering stability such as the steering response, stiffness and grip, and ride comfort by driver's feeling. The results are indicated by scores based on Ref. 1 being 100. The larger the value, the better the steering stability and ride comfort are.

Road noise:

The foregoing test automobile was run at a speed of 80 km/h on a road noise measurement road (rough asphalt road surface), and noise levels dB(A) were picked.

[Table 1]

| | Ref. 1 | Ref. 2 | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|
| Tire section width Wt (mm) | 195 | 165 | | | | | | | | | |
| Aspect ratio H (%) | | 65 | | | | | | | | | |
| Bead diameter Db (inch) | 15 | 19 | | | | | | | | | |
| Internal pressure (kPa) | 250 | 310 | | | | | | | | | |
| Rim width (inch) | 6 | 5 | | | | | | | | | |
| Tire outer diameter Dt (mm) | 633 | 699 | | | | | | | | | |
| Carcass cord | Polyester | Polyester | Aramid | Aramid | Aramid | Aramid | Aramid | Aramid | Aramid | Aramid | Aramid |
| ▪ ▪ Cord structure | 1670dtex/2 | 1670dtex/2 | 800dtex/2 | 800dtex/2 | 800dtex/2 | 800dtex/2 | 800dtex/2 | 800dtex/2 | 800dtex/2 | 800dtex/2 | 1100dtex/2 |
| ▪ ▪ Number of cords (Number / 5 cm) | 50 | 50 | 50 | 50 | 50 | 50 | 50 | 50 | 50 | 50 | 36 |
| ▪ ▪ Number of final twist (times / 10 cm) | 40 | 40 | 60 | 60 | 50 | 65 | 45 | 70 | 60 | 60 | 60 |
| ▪ ▪ Turn up height H (mm) | 65 | 55 | 55 | 27 | 27 | 27 | 27 | 27 | 10 | 35 | 27 |
| Rolling resistance | 100 | 106 | 104 | 108 | 108 | 108 | 108 | 108 | 108 | 108 | 108 |
| Air resistance | 100 | 114 | 114 | 114 | 114 | 114 | 114 | 114 | 114 | 114 | 114 |
| Ride comfort | 100 | 100 | 80 | 102 | 100 | 105 | 98 | 107 | 105 | 100 | 100 |
| Steering stability | 100 | 90 | 115 | 102 | 105 | 100 | 107 | 98 | 100 | 105 | 100 |
| Road noise (dB (A)) | 65.8 | 67.2 | 66.8 | 65.8 | 65.8 | 65.8 | 65.8 | 65.8 | 65.8 | 65.8 | 65.8 |

As shown in Table 1, it is confirmed that Ref. 2 improves the fuel consumption (rolling resistance and air resistance) by narrowing width and enlarging bead diameter while deteriorating steering stability. On the other hand, Ex. 1, which is not according to the invention as claimed, improves steering stability greatly by employing the aramid cord as the carcass cord. In view of the ride comfort, there may be room for improvement. In Ex. 2, it is confirmed that the steering stability and ride comfort are ensured in the same level as Ref. 1 by optimizing the height H of the turn-up portion of the carcass ply. In Ex. 3 and Ex. 4, it is confirmed that steering stability and ride comfort are ensured in the same level as Ref. 1 by setting the number of the final twist of the carcass cord in a range of from 50 to 65 times / 10 cm. In Ex. 5 and Ex. 6, it is confirmed that ride comfort tends to deteriorate while improving steering stability when the number of final twist is less than the above range. It is also confirmed that the steering stability tends to deteriorate while improving the ride comfort when the number of final twist is more than the above range. In Ex. 7 and Ex. 8, it is confirmed that the steering stability and ride comfort are ensured in the same level as Ref. 1 when the height H of the turn-up portion of the carcass ply is in a range of from 10 to 35 mm. Example 9 is not according to the invention as claimed.

**Reference Signs List**

| | |
|---|---|
| 1 | Pneumatic tire |
| 2 | Tread portion |
| 3 | Sidewall portion |
| 4 | Bead portion |
| 5 | Bead core |
| 6 | Carcass |
| 6A | Carcass ply |
| 7 | Belt layer |
| 7A, 7B | Belt piles |
| 9 | Band layer |
| 9A | Band ply |

**Claims**

**1.** A pneumatic tire (1) comprising:

a carcass (6) comprising one carcass ply (6A) comprising a ply main body portion (6a) extending between bead cores (5) of bead portions (4) through a tread portion (2) and sidewall portions (3) and a pair of ply turn-up portions (6b) each turned up around each bead core (5);
a belt layer (7) comprising two belt plies (7A, 7B) disposed radially outward of the carcass (6) in the tread portion (2);
a band layer (9) comprising one band ply (9A) disposed radially outward of the belt layer (7);
a tire section width Wt (unit: mm) in relation to a bead diameter Db (unit: inch) satisfying the following equations (1) and (2),

$$Wt \leq -0.7257 \times (Db)^2 + 42.763 \times Db - 339.67 \text{ --- (1),}$$

and

$$Wt \geq -0.7257 \times (Db)^2 + 48.568 \times Db - 552.33 \text{ --- (2);}$$

a tire outer diameter Dt (unit: mm) satisfying the following equations (3) and (4),

$$Dt \leq 59.078 \times Wt^{0.498} \text{ --- (3),}$$

and

$$Dt \geq 59.078 \times Wt^{0.467} \text{ --- (4)};$$

**characterized in**
**that** the pneumatic tire (1) further comprises:

a carcass cord of the carcass ply (6A) being made of an aramid fiber cord;
**that** the aramid fiber cord comprises a cord structure of 800 dtex/2, and
**that** a radial height H of outer ends of the ply turn-up portions (6b) from a bead base line (BL) are of from 10 to 35 mm.

2. The pneumatic tire (1) according to claim 1,
wherein the aramid fiber cord of the carcass ply (6A) comprises a cord structure of 800 dtex/2, and the number of final twist number of the aramid fiber cord per 10 cm of cord length is of from 50 to 65 times.

**Patentansprüche**

1. Luftreifen (1), umfassend:

eine Karkasse (6), die eine Karkasslage (6A) umfasst, die einen Lagenhauptkörperabschnitt (6a), der sich zwischen Wulstkernen (5) von Wulstabschnitten (4) durch einen Laufflächenabschnitt (2) und Seitenwandabschnitte (3) erstreckt, und ein Paar Lagenumschlagabschnitte (6b) umfasst, die jeweils um jeden Wulstkern (5) umgeschlagen sind;
eine Gürtelschicht (7), die zwei Gürtellagen (7A, 7B) umfasst, die radial außerhalb der Karkasse (6) in dem Laufflächenabschnitt (2) angeordnet sind;
eine Bandschicht (9), die eine Bandlage (9A) umfasst, die radial außehalb der Gürtelschicht (7) angeordnet ist;
wobei eine Reifenquerschnittsbreite Wt (Einheit: mm) in Bezug auf einen Wulstdurchmesser Db (Einheit: Zoll) die folgenden Gleichungen (1) und (2) erfüllt,

$$Wt \leq -0{,}7257 \times (Db)^2 + 42{,}763 \times Db - 339{,}67 \text{ --- (1)},$$

und

$$Wt \geq -0{,}7257 \times (Db)^2 + 48{,}568 \times Db - 552{,}33 \text{ --- (2)};$$

ein Reifenaußendurchmesser Dt (Einheit: mm) die folgenden Gleichungen (3) und (4) erfüllt,

$$Dt \leq 59.078 \times Wt^{0{,}498} \text{ --- (3)},$$

und

$$Dt \geq 59.078 \times Wt^{0{,}467} \text{ --- (4)};$$

**dadurch gekennzeichnet,**
**dass** der Luftreifen (1) ferner umfasst:

einen Karkasskord der Karkasslage (6A), der aus einem Aramidfaserkord hergestellt ist;
**dass** der Aramidfaserkord eine Kordstruktur von 800 dtex/2 umfasst, und
**dass** eine radiale Höhe H von äußeren Enden der Lagenumschlagabschnitte (6b) von einer Wulstgrundlinie (BL) 10 bis 35 mm beträgt.

2. Luftreifen (1) nach Anspruch 1, wobei der Aramidfaserkord der Karkasslage (6A) eine Kordstruktur von 800 dtex/2 umfasst und die Größe der Endverdrillungszahl des Aramidfaserkords pro 10 cm Kordlänge das 50- bis 65-fache beträgt.

**Revendications**

1.  Bandage pneumatique (1) comprenant :

    une carcasse (6) comprenant une nappe de carcasse (6A) comprenant une portion formant corps principal de nappe (6a) s'étendant entre des âmes de talons (5) de portions de talons (4) en traversant une portion formant bande de roulement (2) et des portions formant parois latérales (3), et une paire de portions de nappe retroussées (6b), retroussée chacune vers le haut autour de chaque âme de talon (5) ;
    une couche de ceinture (7) comprenant de nappe de ceinture (7A, 7B) disposée radialement à l'extérieur de la carcasse (6) dans la portion formant bande de roulement (2) ;
    une couche en bande (9) comprenant une nappe de bande (9A) disposée radialement à l'extérieur de la couche de ceinture (7) ;
    une largeur de section du pneumatique Wt (unité : mm) en relation à un diamètre de talon Db (unité : pouce) satisfont les équations suivantes (1) et (2) :

    $$Wt \leq -0{,}7257 \times (Db)^2 + 42{,}763 \times Db - 339{,}67 \qquad (1),$$

    et

    $$Wt \geq -0{,}7257 \times (Db)^2 + 48{,}568 \times Db - 552{,}33 \qquad (2)\,;$$

    un diamètre extérieur du pneumatique Dt (unité : mm) satisfait les équations suivantes (3) et (4) :

    $$Dt \leq 59{,}078 \times Wt^{0{,}498} \qquad (3),$$

    et

    $$Dt \geq 59{,}078 \times Wt^{0{,}467} \qquad (4)\,;$$

    **caractérisé en ce que**
    le bandage pneumatique (1) comprend en outre :

    un câblé de carcasse de la nappe de carcasse (6A) qui est réalisé avec des câblés en fibres aramides ;
    **en ce que** le câblé en fibres aramides comprend une structure de câblé de 800 dtex/2, et
    **en ce qu'**une hauteur radiale H des extrémités extérieures des portions de nappe retroussées (6b), depuis une ligne de base du talon (BL) est de 10 à 35 mm.

2.  Bandage pneumatique (1) selon la revendication 1,
    dans lequel le câblé en fibres aramides de la nappe de carcasse (6A) comprend une structure de câblé de 800 dtex/2, et le nombre de torsades finales du câblé en fibres aramides pour 10 cm de longueur de câblé est de 50 à 65 fois.

# FIG.1

# FIG.2

Ka  Wt=−0.7257×(Db)$^2$+39.134×Db−217.30

Wt=−0.7257×(Db)$^2$
+42.763×Db−339.67

Wt=−0.7257×(Db)$^2$
+48.568×Db−552.33

Y1

Tire section width Wt ( mm )

400
350
300
250
200
150
100
50
0

Bead diameter Db ( inch )

5    10    15    20    25    30    35

EP 3 059 100 B1

FIG.3

Tire outer diameter Dt ( mm )

$Dt = 59.078 \times Wt^{0.498}$

$Dt = 59.078 \times Wt^{0.467}$

Kb

$Dt = 59.078 \times Wt^{0.448}$

Y2

Tire section width Wt ( mm )

**FIG.4**

T1

T2

**EP 3 059 100 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004010781 A
- JP 2004002622 A
- WO 2013065322 A1
- WO 2013065318 A1
- US 20130168000 A1
- JP H01240304 A